# EUROPÄISCHE PATENTSCHRIFT

(11) **EP 2 353 464 B1**
(45) Veröffentlichungstag und Bekanntmachung des Hinweises auf die Patenterteilung: **04.03.2015**
(21) Anmeldenummer: 11000239.1
(22) Anmeldetag: 13.01.2011
(51) Int. Cl.: A47G 27/04

(54) **Sockelleiste, die eine Profilschiene aufweist**
Skirting having a profile rail
Plinthe comprenant un rail de profilé

(30) Priorität: 14.01.2010 DE 202010000996 U
(43) Veröffentlichungstag der Anmeldung: 10.08.2011
(73) Patentinhaber: Küberit Profile Systems GmbH & Co. KG, 58513 Lüdenscheid (DE)
(72) Erfinder: Sondermann, Frank, 57489 Drolshagen (DE)
(74) Vertreter: Witzany, Manfred

(56) Entgegenhaltungen:
- DE-A1- 2 912 030
- DE-U- 1 763 163
- DE-U1-202007 012 734
- DE-U1-202007 014 686
- DE-U1-202010 000 996
- FR-A1- 2 822 181
- US-A- 5 088 252

## Beschreibung

Die Erfindung betrifft eine Sockelleiste mit einer Profilschiene gemäß dem Oberbegriff des Patentanspruchs 1.

Aus der DE 1 763 163 U1 ist eine Sockelleiste bekannt, die eine Profilschiene aus Kunststoff aufweist. Diese Profilschiene ist im Wesentlichen U-förmig geformt, wobei zwischen den Schenkeln des U-Profils ein Aufnahmeraum für einen Belag gebildet ist. In der Regel wird dabei ein Stück jenes Belags eingesetzt, der auch den angrenzenden Fußbodenbelag bildet, so dass die Sockelleiste und der Fußbodenbelag den gleichen optischen Eindruck vermitteln.

Aus der DE 20 2007 012 734 U1 ist eine weitere Sockelleiste bekannt. Diese ist im Wesentlichen U-förmig aufgebaut, wobei freie Enden der U-Schenkel hinterschnitten ausgebildet sind. Auf diese Weise kann ein Bodenbelag in das U-Profil eingeclipst werden. Um unterschiedlich dicke Bodenbeläge einbringen zu können, sind am U-Profil zwei elastische Federn angeformt, die den dünnen Bodenbelag nach vorne drücken. Damit ist der Bodenbelag einem Biegemoment ausgesetzt, welches zu einer Wölbung desselben führen kann.

Aus der DE 29 12 030 C2 ist eine gattungsgemäße Sockelleiste bekannt, in der eine Dekorleiste einclipbar ist. Die Dekorleiste weist Anschläge auf, die mit einer Hinterschneidung der Sockelleiste zusammenwirken. Um die Dekorleiste an der Sockelleiste zu halten, ist an der Sockelleiste eine Feder vorgesehen, die von hinten gegen die Dekorleiste drückt. Diese Sockelleiste hat sich in der Praxis vielfach bewährt und bildet den Ausgangspunkt der vorliegenden Erfindung.

Der Erfindung liegt die Aufgabe zugrunde, eine Sockelleiste der eingangs genannten Art zu schaffen, die sich durch eine universellere Anwendbarkeit auszeichnet.

Diese Aufgabe wird erfindungsgemäß mit den Merkmalen des Patentanspruchs 1 gelöst.

Bei bekannten Sockelleisten wird der Belag unmittelbar mit einem vertikalen Steg der die Sockelleiste bildenden Profilschiene verklebt. Damit trägt der Belag in der Sockelleiste je nach Belagsdicke mehr oder weniger auf, was den optischen Eindruck der Sockelleiste beeinträchtigt. Damit war es notwendig, für unterschiedliche Belagsdicken unterschiedliche Sockelleisten herzustellen, was den Herstellungs- und Lageraufwand in die Höhe trieb und man sich hauptsächlich auf die Anwendung im Zusammenhang mit dünnen Belägen konzentrierte. Um die Sockelleiste universeller einsetzen zu können, ist es erforderlich, eine Dickenanpassung an die jeweilige Belagsdicke zu realisieren. Dies wird dadurch realisiert, dass die Profilschiene der Sockelleiste Anschläge aufweist, gegen die der Belag gedrückt wird. Die dabei erforderliche Druckkraft wird von mindestens einer Feder aufgebracht. Auf diese Weise ist sichergestellt, dass die durch eine Öffnung der Profilschiene sichtbare Belagsseite stets die gleiche Position einnimmt. Bei dicken Belägen wird die Feder entsprechend mehr, bei dünnen Belägen entsprechend weniger komprimiert, wobei sich dieser Ausgleich innerhalb des nicht sichtbaren Aufnahmeraums innerhalb der Profilschiene abspielt. Damit kann ein- und dieselbe Sockelleiste für unterschiedlich dicke Bodenbeläge eingesetzt werden, ohne den optischen Eindruck der Sockelleiste insgesamt zu stören. So kann beispielsweise der obere Abschluss der Sockelleiste derart geformt sein, dass er mit dem Anschlag fluchtet. Ist der Anschlag hinreichend dünn ausgebildet, ergibt sich auch eine nahezu fluchtende Ausrichtung mit dem Belag. Diese optisch gewünschte Fluchtung ist dabei unabhängig von der Belagsdicke, da die Sichtseite des Belags stets am Anschlag anliegt.

Insbesondere bei Verwendung von verformbaren Belägen wie beispielsweise Teppichböden kann die Feder zu einer ungewünschten bauchigen Verformung des Belags führen, wenn die Feder zumindest auch im mittleren Bereich des Belags angreift, wo die Anschläge nicht entgegen drücken. Andererseits stellt sich der Belag auch nicht plan in den Aufnahmeraum ein, wenn ausschließlich an dessen Randbereich mit der mindestens einen Feder gedrückt wird. Zur Lösung dieses Problems wird gemäß Anspruch 1 vorgeschlagen, dass die mindestens eine Feder an mindestens einer Platte vorgesehen ist, die zum Belag gerichtet ist. Damit ist sichergestellt, dass der Belag ausschließlich flächig gedrückt wird, was jegliche bauchige Verformung des Belags unabhängig von dessen Stabilität verhindert.

Die mindestens eine Feder ist als gesondertes Bauteil zwischen der Profilschiene und dem Belag vorgesehen. Damit kann die Feder problemlos aus einem anderen Material gefertigt werden als die Sockelleiste. Dies ist insbesondere in jenen Fällen vorteilhaft, in denen die Sockelleiste aus Materialien mit schlechter Elastizität wie beispielsweise Aluminium gefertigt ist. Eine aus Aluminium gefertigte Feder würde relativ schnell wegen Materialermüdung brechen. Die Dickenanpassung kann in einem größeren Bereich erfolgen, indem für besonders dicke Beläge Federn mit kürzerem Federweg eingesetzt werden als für sehr dünne Beläge. Dabei bleibt die Profilschiene für die Sockelleiste selbst unverändert.

Zur Vereinfachung der Herstellung der gesamten Sockelleiste ist es gemäß Anspruch 2 vorteilhaft, wenn die mindestens eine Feder einstückig mit der Platte ist. Damit entfallen jegliche Montageschritte zur Befestigung der Feder an der Platte.

Zur möglichst kostengünstigen Herstellung der mindestens einen Feder ist es gemäß Anspruch 3 vorteilhaft, wenn die Feder aus der Platte freigeschnitten und aus dieser herausgebogen ist. Dabei spielt es keine Rolle, ob diese Form durch Schneiden bzw. Fräsen und anschließendes Biegen oder beispielsweise durch Spritzgießen erzielt wird. Wichtig ist lediglich, dass sich die Feder außerhalb der Ebenenerstreckung jenes Bauteils, an dem sie gehalten ist, erstreckt und relativ zu diesem Bauteil bewegbar ist. Damit kann die gewünschte Federwirkung erzielt werden.

Schließlich ist es gemäß Anspruch 4 günstig, wenn die mindestens eine Feder aus einem elastischen Metall, einem Polymer bzw. einem Polymerschaum besteht. Als elastisches Metall haben sich insbesondere Eisenlegierungen wie Federstahl oder dgl. bewährt. Als Polymer kommen insbesondere Polyethylen, Polyuretan oder ähnliche Werkstoffe in Betracht. Alternativ kann die Feder auch durch einen Polymerschaum realisiert werden, der beispielsweise vollflächig an der Profilschiene bzw. der Platte angebracht sein kann. Dieser Polymerschaum ist dabei vorzugsweise offenzellig ausgebildet, um einen möglichst großen Federweg zu realisieren.

Der Erfindungsgegenstand wird beispielhaft anhand der Zeichnung erläutert, ohne den Schutzumfang zu beschränken.

Weitere Vorteile und Merkmale der vorliegenden Erfindung werden in der folgenden detaillierten Beschreibung anhand der dazugehörigen Figuren dargelegt, in denen mehrere Ausführungsbeispiele der vorliegenden Erfindung enthalten sind. Es sollte jedoch verstanden werden, dass die Zeichnung nur dem Zweck der Darstellung der Erfindung dient und nicht den Schutzbereich der Erfindung beschränkt.

Es zeigt:
- Figur 1: eine räumliche, teilweise geschnittene Darstellung einer ersten, nicht zum Erfindungsgegenstand gehörender Ausführungsform einer Sockelleiste,
- Figur 2: eine zweite, erfindungsgemäße Ausführungsform der Sockelleiste und
- Figur 3: eine dritte, nicht zum Erfindungsgegenstand gehörende Ausführungsform einer Sockelleiste.

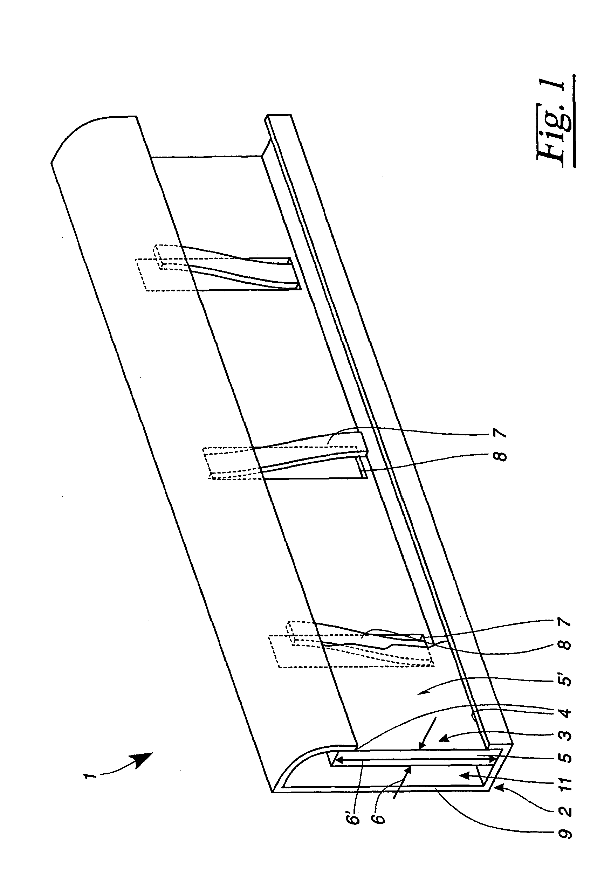

Die Figur 1 zeigt eine räumliche Darstellung einer ersten Ausführungsform einer Sockelleiste 1. Diese Sockelleiste 1 weist eine Profilschiene 2 auf, die einen Aufnahmeraum 11 für einen Belag 5 und eine Öffnung 3 besitzt. Die Öffnung 3 ist kleiner als eine Breite 6'des Belages 5 bemessen. Beidseits der Öffnung 3 ist die Profilschiene 2 mit Anschlägen 4 ausgerüstet, an die der Belag 5 anliegt. Vorzugsweise ist die Öffnung 3 jedoch ausreichend breit, um eine Montage des Belages 5 durch die Öffnung 3 zu ermöglichen. Dabei wird der Belag 5 relativ zur Profilschiene 2 verkippt und hinter den oberen Anschlag geschoben. Anschließend wird der Belag 5 mit seiner Unterkante eingedrückt und hinter den unteren Anschlag 4 geschoben.

Um zu gewährleisten, dass der Belag 5 unabhängig von seiner Dicke 6 sauber an den Anschlägen 4 anliegt, weist die Sockelleiste 1 mehrere Federn 7 auf. Diese Federn 7 üben auf den Belag 5 eine gegen den Anschlag 4 gerichtete Kraft aus. Die Federn 7 sind dabei durch Schnitte 8 von der Rückwand 9 der Profilschiene 2 freigestellt. Die Federn 7 sind dadurch frei beweglich und derart aus der Ebenenerstreckung der Rückwand 9 verbogen, dass sie auch bei dünnen Belägen 5 eine entsprechende Vorspannung gegen den Belag 5 ausüben. Um ein Kippen des Belags 5 um eine Längsachse zu verhindern, sind die Federn 7 derart angeordnet, dass sie wechselweise einerseits im Bereich des oberen und andererseits im Bereich des unteren Anschlags 4 angreifen.

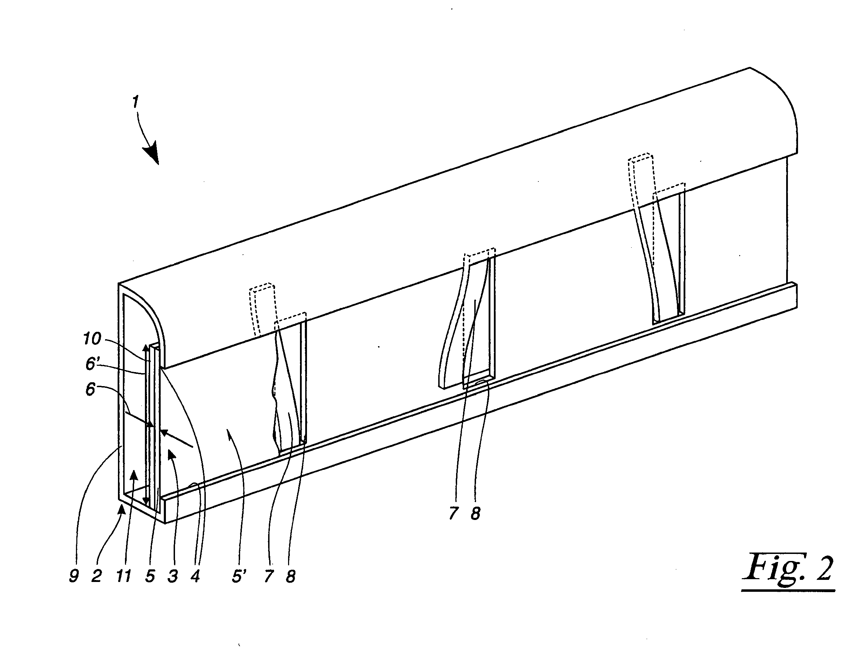

Die Figur 2 zeigt eine alternative Ausführungsform der Sockelleiste 1 gemäß Figur 1, wobei gleiche Bezugszeichen gleiche Teile benennen. Im folgenden wird nur auf die Unterschiede zur Ausführungsform gemäß Figur 1 eingegangen.

Die Federn 7 sind bei dieser Ausführungsform nicht einstückig mit der Rückwand 9 der Profilschiene 2, sondern einstückig mit einer zusätzlichen Platte 10, die als gesondertes Teil im Aufnahmeraum 11 für den Belag 5 vorgesehen ist. Die Platte 10 drückt flächig gegen den Belag 5 und stabilisiert diesen. Diese Maßnahme ist insbesondere bei hoch biegsamen Belägen 5 wie beispielsweise aus textilem Material wichtig, um ein Durchbiegen des Belages 5 zwischen den Anschlägen 4 zu vermeiden. Die Federn 7 sind in gleicher Weise wie bei der Ausführungsform gemäß Figur 1 durch entsprechende Schnitte 8 aus der Platte 10 freigestellt.

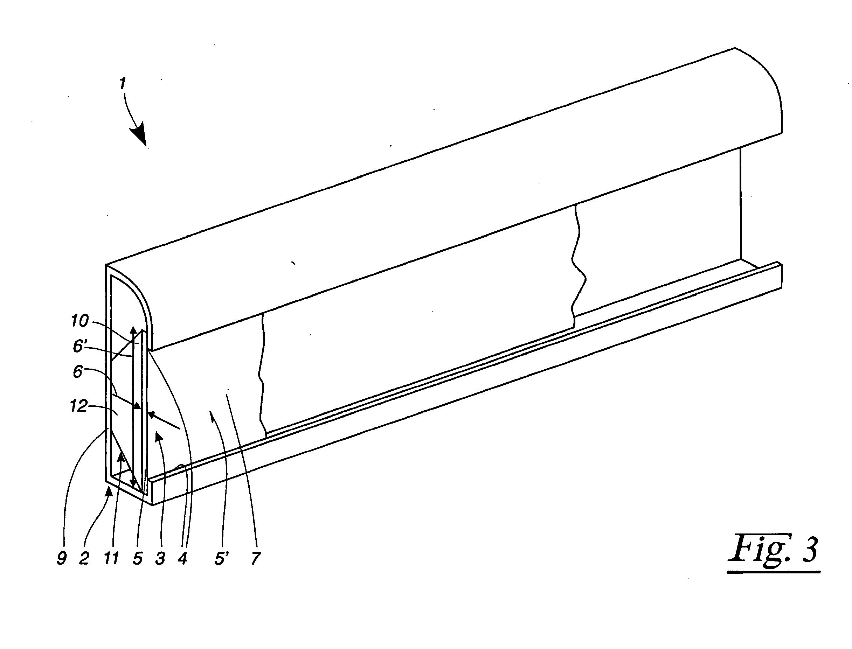

Schließlich zeigt die Figur 3 eine weitere alternative Ausführungsform einer Sockelleiste 1 gemäß Figur 1, wobei wiederum gleiche Bezugszeichen gleiche Teile benennen. Im folgenden wird nur auf die Unterschiede zu der Ausführungsform gemäß Figur 1 eingegangen.

Die Feder 7 ist bei dieser Ausführungsform von einem Polymerschaum 12 gebildet, der beispielsweise mit der Rückwand 9 oder mit dem Belag 5 verklebt sein kann. Diese Klebeverbindung ist jedoch nicht zwingend erforderlich. Vorzugsweise wird der Polymerschaum 12 an der Rückwand 9 der Profilschiene 2 befestigt, um einen leichten Austausch des Belages 5 realisieren zu können. Zur Erleichterung der Montage des Belages 5 ist der Polymerschaum 12 rückseitig schräg zulaufend ausgebildet. Damit kann der Belag 5 leichter verkippt werden.

Da einige Ausführungsbeispiele der vorliegenden Erfindung nicht gezeigt bzw. beschrieben sind, ist zu verstehen, dass eine Vielzahl von Änderungen und Abwandlungen dieser beschriebenen Ausführungsbeispiele möglich ist, ohne den wesentlichen Gedanken und den Schutzbereich der Erfindung zu verlassen, der durch die Ansprüche festgelegt ist.

### Bezugszeichenliste

- 1: Sockelleiste
- 2: Profilschiene
- 3: Öffnung
- 4: Anschlag
- 5: Belag
- 5': Sichtseite
- 6: Dicke
- 6': Breite
- 7: Feder
- 8: Schnitt
- 9: Rückwand
- 10: Platte
- 11: Aufnahmeraum
- 12: Polymerschaum

## Patentansprüche

1. Sockelleiste, die eine Profilschiene (2) aufweist, welche einen Aufnahmeraum (11) für einen Belag (5) bildet, wobei der Aufnahmeraum (11) mindestens eine Öffnung (3) aufweist, durch die eine Sichtseite (5') eines Belags (5) sichtbar ist, wobei die Profilschiene (2) beidseits der Öffnung (3) zu dieser gezogene Anschläge (4) aufweist und die Öffnung (3) kleiner als eine Breite (6') des Belages (5) bemessen ist, und der Belag (5) von mindestens einer Feder (7) gegen die Anschläge (4) gedrückt ist, **dadurch gekennzeichnet, dass** zwischen der mindestens einen Feder (7) und dem Belag (5) mindestens eine Platte (10) vorgesehen ist, um den Belag (5) plan zu halten und die mindestens eine Feder (7) an der Platte (10) als gesondertes Bauteil zwischen der Profilschiene (2) und dem Belag (5) vorgesehen ist.

2. Sockelleiste nach Anspruch 1, **dadurch gekennzeichnet, dass** die mindestens eine Feder (7) einstückig mit der Platte (10) ist.

3. Sockelleiste nach Anspruch 2, **dadurch gekennzeichnet, dass** die mindestens eine Feder (7) aus der Platte (10) freigeschnitten und herausgebogen ist.

4. Sockelleiste nach mindestens einem der Ansprüche 1 bis 3, **dadurch gekennzeichnet, dass** die mindestens eine Feder (7) aus einem elastischen Metall, einem Polymer und/oder einem Polymerschaum besteht.

## Claims

1. Skirting having a profiled rail (2) which forms an accommodating area (11) for a covering (5), the accommodating area (11) having at least one opening (3), through which a visible side (5') of a covering (5) can be seen, the profiled rail (2) having stops (4) on both sides of the opening (3) which are drawn towards said opening and the opening (3) being dimensioned so as to be smaller than a width (6') of the covering (5), and the covering (5) being pressed against the stops (4) by at least one spring (7), **characterized in that** at least one plate (10) is provided between the at least one spring (7) and the covering (5) in order to keep the covering (5) flat, and the at least one spring (7) is provided on the plate (10) as a separate component part between the profiled rail (2) and the covering (5).

2. Skirting according to Claim 1, **characterized in that** the at least one spring (7) is integral with the plate (10).

3. Skirting according to Claim 2, **characterized in that** the at least one spring (7) is cut free from or bent out of the plate (10).

4. Skirting according to at least one of Claims 1 to 3, **characterized in that** the at least one spring (7) consists of an elastic metal, a polymer and/or a polymer foam.

## Revendications

1. Plinthe, comprenant un rail profilé (2), qui forme un espace de réception (11) pour une garniture (5), l'espace de réception (11) présentant au moins une ouverture (3) à travers laquelle un côté visible (5') d'une garniture (5) est visible, le rail profilé (2) présentant, de part et d'autre de l'ouverture (3), des butées (4) tirées vers celle-ci, et l'ouverture (3) étant dimensionnée de manière à être plus petite qu'une largeur (6') de la garniture (5), et la garniture (5) étant pressée par au moins un ressort (7) contre les butées (4), **caractérisée en ce qu'**entre l'au moins un ressort (7) et la garniture (5) est prévue au moins une plaque (10) pour retenir la garniture (5) à plat et l'au moins un ressort (7) est prévu sur la plaque (10) sous forme de composant séparé entre le rail profilé (2) et la garniture (5).

2. Plinthe selon la revendication 1, **caractérisée en ce que** l'au moins un ressort (7) est réalisé d'une seule pièce avec la plaque (10).

3. Plinthe selon la revendication 2, **caractérisée en ce que** l'au moins un ressort (7) est découpé et recourbé hors de la plaque (10).

4. Plinthe selon au moins l'une quelconque des revendications 1 à 3, **caractérisée en ce que** l'au moins un ressort (7) se compose d'un métal élastique, d'un polymère et/ou d'une mousse polymère.
